# EUROPÄISCHE PATENTANMELDUNG

(11) **EP 1 277 408 A2**
(43) Veröffentlichungstag der Anmeldung: **22.01.2003**
(21) Anmeldenummer: 02102031.8
(22) Anmeldetag: 15.07.2002
(51) Int. Cl.: A23D 7/00, A23D 9/00

(54) **Verwendung von Wasser-in-Öl-Emulsion zur Stabilisierung von Brat- und Siedefett unter Frittierbedingungen**

(30) Priorität: 18.07.2001 DE 10134881
(71) Anmelder: Gertz, Barbara, 58093 Hagen (DE); Mertens, Andrea, 83126 Flintsbach am Inn (DE)
(72) Erfinder: Gertz, Christian, 58093 Hagen (DE)
(74) Vertreter: Eisenführ, Speiser & Partner

(57) **Zusammenfassung**

Beschrieben wird eine Wasser-in-Öl-Emulsion als Zusatzmittel für Brat-, Siede- und Frittierfette, wobei die Wasser-in-Öl-Emulsion Antioxidantien in Kombination mit wasserlöslichen Carbonsäuren enthält.

## Beschreibung

Als Frittieren bezeichnet man einen Zubereitungsprozess, bei dem das Lebensmittel, z. B. Pommes Frites, im Fett schwimmend bei ca. 120 bis 200 °C in Gegenwart von Wasser, das im Lebensmittel gebunden ist, gegart wird. Die Wärmeübertragung auf das Lebensmittel erfolgt dabei durch das Frittiermedium (Frittierfett).

Im Lauf der thermischen Belastung wird das Frittierfett regelmäßig strukturell verändert. Es bilden sich Abbauprodukte in Folge von Oxidations- und Polymerisationsreaktionen, welche die Qualität des Frittierfetts negativ beeinflussen. Dabei spielen viele Faktoren, wie Art und Menge des Frittiergutes, Beschaffenheit der Fritteuse (Oberfläche, Volumen, Art der Wärmeübertragung, Metallkontakte), Frittierfett (Zusammensetzung, Hitzestabilität, Zugabe von frischem Öl) und die Art besonderer küchentechnischer (Filter) und schützender Maßnahmen (Verwendung von Siliconölen, Antioxidantien, Stickstoff) eine Rolle.

Beim Frittierprozess selbst wird nach dem ersten Kontakt des Lebensmittels mit dem Frittiermedium (Öl) eine ca. 0,3 mm dicke Randschicht gebildet und zunächst frei in einem Lebensmittel (z.B. Pommes Frites) vorhandenes Wasser auf ca. 100 °C (Fleisch 80 °C) erhitzt, um dann als Wasserdampf aus dem Lebensmittel auszutreten. Es bildet sich eine Temperatur von etwa 100 °C, die langsam in das Innere vordringt und das gebundene Wasser desorbiert. Dabei bildet sich ein Druck- und Temperaturgefälle zum Innern des Lebensmittels (Frittiergutes) aus. Der hohe Druck in der Randzone des Lebensmittels verhindert in dieser Phase ein Eindringen des Fettes in das Lebensmittel. Wird nicht mehr genug Wärme, z. B. durch zu niedrige Temperatur oder zu starkes Abkühlen des Fettes (zu viel Frittiergut-Zugabe) herangebracht, kann kein Wasser mehr als Dampf austreten.

Beim Frittieren steigt die Temperatur im Kern des Lebensmittels (z.B. bei Pommes Frites) auf 100 °C. Dabei wird beim Frittieren kontinuierlich Wasser aus dem Frittiergut an das umgebende Fett abgegeben. Damit befindet sich das System Frittierfett<->Frittiergut in einer Art Gleichgewicht.

Die der Fritteuse zugeführte Hitzeenergie wird vom System vorwiegend für den Backprozess verbraucht und nicht zu einer Zersetzung des Frittierfettes, was sich in starkem Qualmen bemerkbar machen würde. Steigt der Gehalt an Seifen und anderen polaren Zersetzungsprodukten des Fettes zu stark , wird auch das im Lebensmittel verbliebene Wasser vollkommen an das Frittierfett abgegeben. Pommes Frites beispielsweise werden schließlich im Innern hohl (unattraktiv) und das frittierte Gut nimmt aufgrund der gestiegenen Viskosität des Fettes an der Oberfläche mehr Fett auf als bei Verwendung eines frischen Frittiermediums, was sich nicht nur in einem gesteigerten Fettverbrauch bemerkbar macht, sondern auch zu einem zu fettigen Geschmack des Frittiergutes (z.B. Pommes Frites) führt.

Die Art und Menge sowie die Geschwindigkeit der beim Frittieren gebildeten thermisch-oxidativ veränderten Fettbestandteile sind im Wesentlichen abhängig von der Zusammensetzung des Frittierfetts und der angewandten Temperatur. Die Hitzestabilität des Frittierfetts spielt dabei eine wesentliche Rolle. Sie ist abhängig von der Art des Fettes. Harte Speisefette wie Palmkernfett oder gehärtete Fette sind stabiler als Öle mit einem höheren Gehalt an einfach und mehrfach ungesättigten Fettsäuren. Die Hitzestabilität kann auch durch Verwendung von (a) künstlichen Antioxidantien wie TBHQ, Gallaten, BHA, BHT, Dimethylpolysiloxan (Silicon), (b) natürlichen Antioxidantien wie Tocopherolen, Ingwer-, Salbei- und Rosmarinextrakten bzw. -konzentraten oder (c) besonderen Ölmischungen, die einen hohen Gehalt von natürlichen antioxidativ wirkenden Stoffen (z.B. Sesamöl oder Reisschalenöl) aufweisen, erreicht werden.

Im Gegensatz zum Haushalt, in dem Frittierfett in der Regel nur wenige Male benutzt wird, ist die Hitzestabilität der Frittierfette z.B. im Cateringbereich, Gastronomiebereich und in der industriellen Herstellung von vorfrittiertem Frittiergut (z. B. Pommes Frites) das entscheidende Auswahlkriterium. Außerdem spielen Geruch und Geschmack, das Aussehen und die Lagerstabilität des frittierten Produktes eine entscheidende Rolle.

Zunehmend werden bei der Auswahl des Frittierfetts auch ernährungsphysiologische Aspekte wie ein möglichst niedriger Gehalt an Transfettsäuren (z.B. < 10 %, vorzugsweise < 5 %, berechnet als Triglycerid pro hundert Gramm Fett).

Zur Stabilisierung von Frittierfett ist bereits ein sogenanntes "Miroil-Fry-Powder" bekannt. Hierbei handelt es sich es sich um eine pulverartige Zubereitung aus einem mineralischem Pulver (Perlithe) mit ca. 50 % Wasser und 5-10 % Zitronensäure, welches direkt dem Frittierfett in einer Dosierung von 20 g / 10 kg Fett zugeben wird. Das Pulver Miroil-Fry-Powder ist allerdings in einigen Ländern wegen der möglichen Aufnahme des Perlithes zusammen mit dem Lebensmittel bei direkter Zugabe in die Friteuse nicht zugelassen.

Optimales Frittieren bedeutet demnach nicht nur den Fettverderb zu verlangsamen sondern auch die Qualität des Frittiergutes zu verbessern.

Es war die Aufgabe der vorliegenden Erfindung, Zusammensetzungen und Verfahren anzugeben, die eine Stabilisierung eines Frittiermediums (Frittierfetts) ermöglichen und vorzugsweise gleichzeitig die Qualität eines frittierten Lebensmittels im Vergleich zu Lebensmitteln, die auf herkömmliche Weise frittiert werden, steigern.

Diese Aufgaben werden erfindungsgemäß durch die Gegenstände der unabhängigen Patentansprüche gelöst. Vorteilhafte Weiterbildungen der Erfindung ergeben sich aus den abhängigen Ansprüchen und der nachfolgenden Beschreibung.

Die Erfindung basiert auf den folgenden Erkenntnissen, die einzeln für sich betrachtet teilweise bereits bekannt waren, teilweise aber auch unbekannt waren und insbesondere in ihrer Kombination noch niemals Berücksichtigung fanden.

Bislang wurde allgemein angenommen, dass die Anwesenheit von Wasser während eines Frittiervorganges nachteilig ist. Es wurde nämlich davon ausgegangen, dass sich unter Frittierbedingungen das Frittiermedium (Frittierfett) vorwiegend hydrolytisch, d.h. unter Beteiligung von Wasser und unter Bildung von freien Fettsäuren, Mono-, Diglyceriden und Glycerin zersetzt (vgl. S.G. Stevens et al., JAOCS 61 (1984) 1102).

Im Rahmen der vorliegenden Erfindung wurde nun zwar bestätigt, dass der Wassergehalt eines zu frittierenden Lebensmittels und des Frittierfettes selbst für die Haltbarkeit des Frittierfettes und die Qualität des frittierten Produktes (frittierten Lebensmittels) mitentscheidend ist. Überraschenderweise zeigte sich jedoch, dass die Anwesenheit von Wasser in einem Frittierfett keinesfalls lediglich negative Auswirkungen hat; im Gegenteil trägt die Anwesenheit von Wasser zu einer Stabilisierung des Frittiermediums und zu einer Verbesserung der Qualität des frittiertes Produktes bei.

Mit Blick auf die bislang vorherrschende Annahme, dass die Anwesenheit von Wasser in einem Frittiermedium während des Frittiervorganges zu einer Hydrolyse führt, wurde nun überraschenderweise festgestellt, dass die Anwesenheit von Wasser, welches z.B. aus einem Frittiergut in ein Frittierfett hinein freigesetzt wird, überraschenderweise nicht zu einer Veränderung des Anteils an Mono- und Diglyceriden als hydrolytischen Abbauprodukten des Frittierfettes führt. Da der Gehalt an Mono- und Diglyceriden beim Frittieren aber nahezu konstant bleibt (vgl. Hamilton und E. Perkins, New Developments in Industrial Frying, SCI Barnes & Associates, S. 28) kann auch keine Hydrolyse der Fettbausteine stattgefunden haben.

Im Rahmen der Erfindung wurde daher davon ausgegangen, dass die Bildung freier Fettsäuren vorwiegend oxidativ bedingt ist, und Untersuchungen zeigten, dass der während eines Frittiervorgangs aus dem Frittiermedium entweichende Wasserdampf (wobei das Wasser wiederum in erster Linie aus dem frittierten Lebensmittel stammt) den direkten oberflächlichen Kontakt des Luftsauerstoffs mit dem Frittierfett zumindest im Wesentlichen unterbindet, Zudem wurde festgestellt, dass sich Frittierfette beim kontinuierlichen Frittieren von Lebensmitteln erheblich langsamer oxidativ zersetzen als in der Hitze in Abwesenheit von Lebensmitteln.

Die Anwesenheit von Wasser während des Frittiervorganges in einem Frittiermedium führt jedoch überraschenderweise nicht nur zu einer längeren Haltbarkeit des Frittiermediums, die sich aus einer Unterdrückung oxidativer Prozesse ergibt, sondern führt auch zu einer Verbesserung der Qualität des frittierten Lebensmittels. Diese positive Wirkung des Wassers beruht auf dem Umstand, dass Frittieren ein Prozess ist, bei dem neben einem Stoffaustausch (Übergang von Wasser aus dem Lebensmittel in das Frittiermedium und Übergang von Fett/Öl aus dem Frittiermedium in das zu frittierende Lebensmittel) auch ein Wärmeaustausch zwischen Frittiermedium (Frittierfett) und Lebensmittel erfolgt. Übliche Frittierfette besitzen zwar eine hohe Wärmekapazität, übertragen jedoch die gespeicherte Wärme schlecht auf ein zu frittierendes Lebensmittel, während Wasser einen hohen spezifischen Übertragungskoeffizient besitzt, wie sich aus der nachfolgenden Tabelle ergibt.

| Komponente | Spezifischer Wärmeübertragungskoeffizient nach Sahin [kJ/kg K] |
|---|---|
| Wasser | 4,182 |
| Eiweiss | 1,550 |
| Fett | 1,670 |
| Kohlenhydrate | 1,420 |

Die Anwesenheit von Wasser in einem Frittiermedium führt also zu einer verbesserten Wärmeübertragung vom Frittiermedium auf das zu frittierende Lebensmittel und damit zu einer positiven Beeinflussung der Qualität des frittierten Lebensmittels.

Über die genannten Vorteile hinaus beeinflusst die Anwesenheit von Wasser in einem Frittiermedium, z.B. beim Frittieren von Fleisch, die Porengröße der sich bildenden Kruste positiv und führt insbesondere zu einer ästhetisch ansprechenderen äußeren Beschaffenheit (Textur) des frittierten Lebensmittels.

Durch Verwendung der erfindungsgemäßen Öl-in-Wasser-Emulsion lässt sich die Haltbarkeit (Verwendbarkeit) eines Frittierfettes um ein Mehrfaches steigern (z.B. auf das Vierfache der Haltbarkeit des Frittierfettes in Abwesenheit der erfindungsgemäßen Emulsion). Gleichzeitig wird bei Verwendung der erfindungsgemäßen Emulsion in einem Frittierfett die Qualität der frittierten Produkte gesteigert.

In der Praxis werden zur Stabilisierung eines Frittiermediums etwa 100 Gewichtsteile des Frittiermediums (Frittierfett, Siedefett, Bratfett) mit 1 Gewichtsteil der erfindungsgemäßen Wasser-in-ÖI-Emulsion vermischt (Mischungsverhältnis Emulsion/Frittierfett = ca. 1/100), doch lassen sich zufriedenstellende Resultate bereits bei einem Mischungsverhältnis von etwa 1/200 (Massenanteil Emulsion ca. 0,5 Gew.-%). erzielen.

Bei Verwendung der erfindungsgemäßen Emulsionen in einem Frittierfett ergibt sich eine höhere Frittier-Produktivität insbesondere aufgrund der verbesserten Wärmeübertragung. So kann die Temperatur eines Frittiermediums während eines Frittiervorganges grundsätzlich um etwa 10°C tiefer gewählt werden als ohne Verwendung der erfindungsgemäßen Emulsion. Hieraus resultiert selbstverständlich eine beträchtliche Energieeinsparung im Bereich von etwa 5-10%. Eine bevorzugte Frittiertemperatur bei Verwendung der erfindungsgemäßen Emulsion liegt im Bereich von 160-165°C.

Bei Verwendung der erfindungsgemäßen Emulsion in einem Frittierfett ergibt sich insbesondere beim Frittieren von Pommes Frites eine positive Geschmacksbeeinflussung. Unter Verwendung der erfindungsgemäßen Emulsion frittierte Pommes Frites schmecken weniger stark nach Fett und stärker nach Kartoffeln als in Abwesenheit der erfindungsgemäßen Emulsion. Unabhängig vom eingesetzten Grund-Frittiermedium sind die frittierten Pommes Frites weniger fettnass.

Bezogen auf Pommes Frites wurde festgestellt, dass die Fettaufnahme auf die Hälfte sinkt, wenn die erfindungsgemäße Emulsion im Frittiermedium eingesetzt wird. Insbesondere bei einer im Vergleich mit üblichen Frittierverfahren reduzierten Frittiertemperatur lässt sich die Fettaufnahme drastisch reduzieren; dies betrifft neben Pommes Frites insbesondere solche Produkte wie Berliner und Fischstäbchen. Hierdurch wird der Verlust an Frittierfett durch Übergang von Fett in das zu frittierende Lebensmittel wesentlich reduziert. Das Frittiergut selbst bleibt wesentlich länger warm und wirkt auch nach dem Erkalten nicht fettdurchtränkt.

Bei Verwendung der erfindungsgemäßen Emulsionen in einem Frittiermedium gibt es kaum noch eine Geschmacksübertragung von einem zuerst frittierten Produkt zu einem nachfolgend frittierten weiteren Produkt. Z.B. kann zuerst Fisch frittiert werden und danach Apfelküchlein, ohne dass die Apfelküchlein in nennenswertem Ausmaße den Geschmack des frittierten Fisches aufnehmen.

Aufgrund der bei Verwendung der erfindungsgemäßen Emulsion akzeptablen reduzierten Frittiertemperaturen wird der Fettverderb entscheidend verlangsamt; so manche chemische Reaktion, die bei höheren Temperaturen zu einem Fettverderb beiträgt, findet bei einer tieferen (Frittier-)Temperatur nicht statt.

Vorzugsweise wird bei einer Frittiertemperatur unterhalb von 175°C gearbeitet, um die Bildung von cancerogenen, heterozyklischen aromatischen Aminen während eines Frittiervorgangs und auch die Zersetzung organischer Carbonsäuren zu vermeiden.

Aufgrund der verbesserten Wärmeübertragung vom Frittiermedium auf das zu frittierende Lebensmittel bei Verwendung der erfindungsgemäßen Emulsionen wird im Frittiergut die Kerntemperatur (z.B. bei Pommes Frites ca. 100-102°C) schneller erreicht als bei Verzicht auf den Einsatz der erfindungsgemäßen Emulsion.

Die erfindungsgemäßen Wasser-in-Öl-Emulsionen umfassen ein oder mehrere Antioxidantien (Antioxidationsmittel) in Kombination mit wasserlöslichen Carbonsäuren. Carbonsäure und Antioxidantien sind dabei vorzugsweise so ausgewählt und mengenmäßig aufeinander abgestimmt, dass die antidoxidative und dadurch hitzestabilisierende Wirkung der Antioxidantien im Vergleich zum alleinigen Einsatz des Antioxidans synergistisch verstärkt wird. Die synergistische Verstärkung beruht dabei vermutlich auf einem komplexen Zusammenspiel der beiden Komponenten. Aufgrund der Anwesenheit von Carbonsäure und Antioxidationsmittel wird vorteilhafterweise auch die Ablagerung von Polymerisationsprodukten der Frittierfette an den (Metall-)-Oberflächen der Friteuse verhindert.

Vorzugsweise ist die erfindungsgemäß eingesetzte wasserlösliche Carbonsäure in der Lage, Metallionen zu komplexieren (metall-komplexierende Carbonsäure); besonders bevorzugt ist im Rahmen der Erfindung die Verwendung von Zitronensäure.

In Brat- und Siedefetten (Frittierfetten) ist die maximal einsetzbare Menge von Wasser bedauerlicherweise sehr gering, da es bei der Zugabe übergroßer Mengen an wässrigen Lösungen oder Wasser zu einem erhitzten Frittiermedium zu starkem Spritzen bzw. zur Explosion kommen kann. Die erfindungsgemäße Verwendung wasserlöslicher (organischer) Carbonsäuren in Kombination mit einer oder mehreren Antioxidantien vorzugsweise natürlicher oder pflanzlicher Herkunft ergänzt aber die stabilisierende Wirkung des Wassers in hervorragender Weise und führt zu einer wesentlichen Verbesserung der antioxidativen und hitzestabilisierenden Wirkung von Wasser und Antioxidans im Vergleich zu Applikation der einzelnen Bestandteile der erfindungsgemäßen Emulsion. Bezogen auf die wässrige Phase der erfindungsgemäßen Wasser-in-ÖI-Emulsion wird die wasserlösliche Carbonsäure in einer Menge von z.B. 5-10 Gew.-% eingesetzt. Die wasserlösliche Carbonsäure (z.B. Zitronensäure) wird dabei regelmäßig in entsprechender Menge in Wasser gelöst, bevor die entstandene wässrige Lösung in die Ölphase einemulgiert wird. Der wässrigen Phase können selbstverständlich auch weitere wasserlösliche Substanzen zugegeben werden, wie z.B. reduzierende Zucker, die die Bräunung des Lebensmittels durch Förderung der Maillard-Reaktion unterstützen. Bei Einsatz von Zitronensäure ist eine synergistische Verstärkung der antioxidativen Wirkung des oder der eingesetzten Antioxidationsmittel festzustellen. Ferner verhindert die Anwesenheit von Zitronensäure zumindest weitestgehend die Ablagerung brauner Polymerisationsprodukte des eingesetzten Frittierfetts auf der Metalloberfläche der Friteuse, wie erste Tests belegen.

Die erfindungsgemäß eingesetzten Antioxidationsmittel (Antioxidantien) werden vorzugsweise in der Ölphase (Fettphase) der erfindungsgemäßen Wasser-in-Öl-Emulsion eingesetzt. Bevorzugte Antioxidantien (antioxidativ wirkende Additive) sind Tocopherole (Tocopherolextrakt), die insbesondere zur Verbesserung der Lagerstabilität beitragen, sowie Ascorbylpalmitat, welches insbesondere zu einer Hitzestabilisierung eines Frittierfettes beiträgt. Die Verwendung anderer Antioxidationsmittel ist selbstverständlich ebenfalls möglich.

Es ist somit festzuhalten, dass vorzugsweise das Antioxidans oder die Antioxidationsmittel in der Ölphase vorliegen, während die wasserlösliche Carbonsäure in der wässrigen Phase vorliegt.

Als Hauptbestandteile der Ölphase (Fettphase) der erfindungsgemäßen Wasser-in-Öl-Emulsion werden vorzugsweise wahlweise native und/oder nicht-raffinierte Speiseöle eingesetzt. Diese haben gegenüber raffinierten Speiseölen (Raffinaten) eine höhere hitzestabilisierende Wirkung.

Die wässrige Phase einer erfindungsgemäßen Wasser-in-ÖI-Emulsion liegt üblicherweise in einer Menge von 15-25 Gew.-%, vorzugsweise 18-22 Gew.-% vor, bezogen auf die Gesamtmasse der erfindungsgemäßen Emulsion. Die Emulsion wird üblicherweise durch einen üblichen Emulgator stabilisiert.

Zur Stabilisierung eines Frittierfettes (Frittiermediums) wird die erfindungsgemäße Wasser-in-ÖI-Emulsion in der gewünschten Menge (siehe oben) dem zu stabilisierenden Frittiermedium zugesetzt, wobei der Emulsionscharakter üblicherweise verloren geht. Die wässrige Phase der erfindungsgemäßen Wasser-in-Öl-Emulsion löst sich nämlich üblicherweise in der großen Menge Frittierfett, dem es zugesetzt wurde, zumindest in der Hitze vollständig auf. Vorzugsweise wird einem zu stabilisierenden Frittierfett eine solche Menge an erfindungsgemäßer Emulsion zugesetzt, dass das Frittierfett bei der Zugabetemperatur und vorzugsweise auch bei der Frittiertemperatur wassergesättigt ist. Hierdurch wird das Gleichgewicht zwischen Wasser im Lebensmittel (Frittiergut) und Wasser im Frittierfett vorteilhaft beeinflusst. Insbesondere wird wie bereits erwähnt aufgrund der Wasseranteile im Frittierfett der Oxidationsprozess beim Frittieren verlangsamt und die Wärmeübertragung vom Fett auf das zu frittierende Lebensmittel während des Erhitzens verbessert.

Eine bevorzugte Wasser-in-ÖI-Emulsion umfasst
- Öle (Fette) in einer Menge von 70-90 Gew.-%, vorzugsweise 75-85 Gew.-%,
wobei in der Praxis ein Wert von etwa 80 Gew.-% bevorzugt ist;
- Wasser in einer Menge von etwa 12-20 Gew.-%, vorzugsweise 14-18 Gew.-%,
wobei in der Praxis eine Menge von etwa 16 Gew.-% bevorzugt ist;
- eine oder mehrere wasserlösliche Carbonsäuren (z.B. Zitronensäure) in einer Menge von etwa 0,5-4 Gew.-%, vorzugsweise etwa 1-2 Gew.-% in der verwendeten Emulsion,
- ein oder mehrere Antioxidationsmittel (Antioxidantien), z.B. Tocopherolextrakt und/oder Ascorbylpalmitat, in einer Menge von vorzugsweise 0,1-1 Gew.-%;
- einen oder mehrere Emulgatoren zur Bildung und/oder Stabilisierung der erfindungsgemäßen Emulsion sowie
- gegebenenfalls weitere übliche Zusatzstoffe (z.B. reduzierender Zucker);
wobei die Summe der eingesetzten Bestandteile 100 Gew.-% beträgt.

Mit einer Emulsion-Modellmischung von 1000 ml, zusammengesetzt aus z.B. ca. 200-600 ml (vorzugsweise 400 ml) nativem Rapsöl, ca. 200-600 ml (vorzugsweise 400 ml) Maiskeimöl, ca. 100-500 ml (z.B. 200 ml) einer Lösung von ca. 10 g Zitronensäure pro 100 ml Wasser (10%-ige wässrige Lösung der Zitronensäure), ca. 5-20 g (vorzugsweise 10 g) Emulgator (siehe oben; vorzugsweise Fettgehalt 0,1-5 %), ca. 1-15 g (vorzugsweise 4 g) Ascrobylpalmitat (Fettsäureester der Ascorbinsäure) und eventuell bei Bedarf ca. 1-10 g (vorzugsweise 4 g) Tocopherolkonzentrat (Vitamin E) wurden hervorragende Ergebnisse erzielt, wobei eine einmalige Zugabe von 1 Gew.-% (bezogen auf die Gesamtmasse aus Frittierfett und zugesetzter Emulsion) (bei Bedarf auch 0,5-10%-iger Zugabe) der Emulsion zu einem erhitzten Frittierfett (Brat- und Siedefett) erfolgte. Die Verwendbarkeit des Frittierfettes wurde durch den Zusatz der erfindungsgemäßen Modellmischung auf ca. das Vier- bis Sechsfache verlängert. Im Versuch blieben die Wände und Heizstäbe der Friteuse dabei frei von brauner Ablagerung, wie sie unter vergleichbaren Bedingungen in Abwesenheit der erfindungsgemäßen Emulsion regelmäßig auftritt. Eine mehrfache Zugabe der erfindungsgemäßen Emulsion zu einem Frittierfett z.B. nach jeweils mehreren, z.B. jeweils acht Stunden verbesserte den erfindungsgemäßen Effekt nochmals und führte zu einer Optimierung der Frittierbedingungen.

Das nachfolgende Beispiel illustriert die Vorteile, die durch den Zusatz einer erfindungsgemäßen Emulsion zu einem Frittierfett erhalten werden.

### Beispiel 1:

Untersuchung zur thermischen Zersetzung eines Frittierfetts ohne bzw. mit Zusatz einer erfindungsgemäßen Emulsion:

Einem handelsüblichen Frittierfett auf Basis von Pflanzenöl wurden 0,4 Gew.-% einer erfindungsgemäßen Emulsion zugesetzt, die (bezogen auf die erfindungsgemäße Emulsion) 80 Gew.-% Öle, 16 Gew.-% Wasser, 1-2 Gew.-% Zitronensäure sowie Ascorbylpalmitat, Tocopherolextrakt und Emulgatoren umfasste. In dem so behandelten Frittieröl lag nach dem Zusatz in der Hitze keine wässrige Phase mehr vor, sondern das Wasser hatte sich vollständig im Frittiermedium aufgelöst.

Das behandelte Frittiermedium wurde dann zur Bestimmung seiner relativen Stabilität mit einem unbehandelten Frittiermedium ansonsten gleicher Zusammensetzung verglichen.

Hierzu wurden in zwei Friteusen parallel jeweils nacheinander Pommes Frites, Kroketten, panierte Schnitzel und panierter Fisch frittiert, wobei in der ersten Friteuse das mit der erfindungsgemäßen Emulsion behandelte Frittiermedium und in der zweiten Friteuse das unbehandelte Frittiermedium eingesetzt wurde. Nach jeweils 10 Stunden wurde je eine Probe des Frittiermediums aus jeder der beiden Friteusen entnommen und der Gehalt an polaren Anteilen bestimmt, welcher als Maß für die thermische Zersetzung des Frittiermediums angesehen werden kann.

Während das unbehandelte Frittiermedium bereits nach 25 Stunden erkennbar verdorben war, war die Menge an polaren Anteilen in dem mit der erfindungsgemäßen Emulsion behandelten Frittiermedium auch nach 50 Betriebsstunden noch sehr gering, so dass einer Weiterverwendung des Frittiermediums nichts im Wege gestanden hätte. Festzustellen war in dem behandelten Frittiermedium lediglich eine dunkle Verfärbung, welche sich allerdings als lebensmittelchemisch unbedenklich erwies und wohl auf die Maillardreaktion zurückzuführen ist.

Während des Versuches war der Austrag von behandeltem Frittiermedium deutlich geringer als der Austrag von unbehandeltem Frittiermedium. Dem unbehandelten Frittiermedium wurden 2,5 I unbehandeltes Öl/8 Stunden zugesetzt, um den Fettaustrag auszugleichen, insgesamt wurden 22,5 I Öl (Frittiermedium) zugesetzt. Dem behandelten Frittiermedium wurden hingegen nur 0,5 I Öl (Frittiermedium mit einem Anteil von 0,4 Gew.-% erfindungsgemäßer Emulsion)/8 Stunden zugesetzt, um den Fettaustrag durch das frittierte Lebensmittel auszugleichen. Insgesamt wurden lediglich 12,5 I behandeltes Öl zugesetzt.

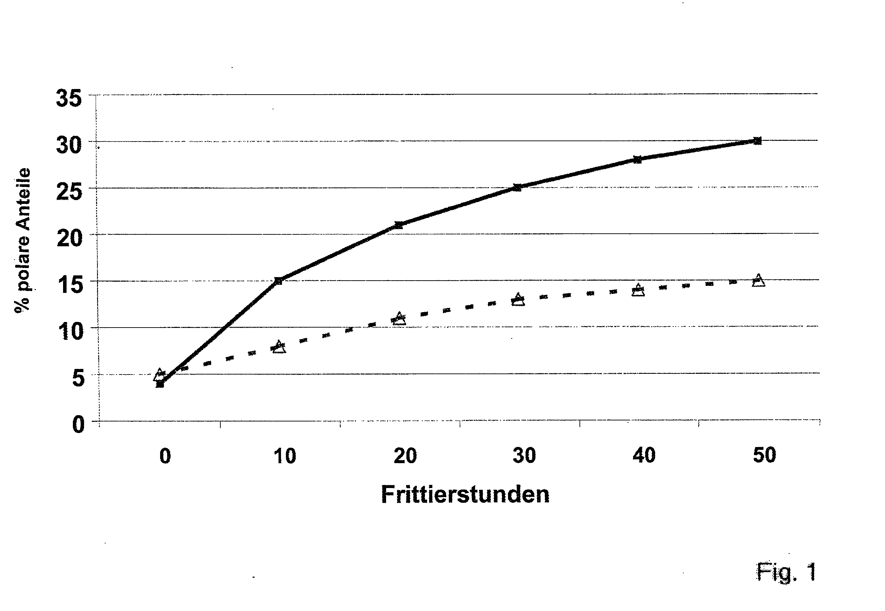

In Figur 1 ist für beide Frittiermedien der polare Anteil in Gew.-% gegen die Frittierstunden aufgetragen, wobei die durchgezogene Linie den Verlauf für das unbehandelte Frittiermedium und die gestrichelte Linie den Verlauf für das behandelte Frittiermedium angibt.

Ergänzend sei angemerkt, dass mittels der erfindungsgemäßen Emulsion nicht nur eine bessere Stabilisierung des Frittierfetts erreicht werden konnte, sondern die sensorische Prüfung des Frittiergutes ergab, dass dieses auch hinsichtlich der Frittierqualität deutlich gesteigert werden konnte. Die Verbesserung der Qualität des Frittiergutes ist mithin ein weiteres Indiz für die hervorragende Eignung der Emulsion als Zusatz (Zutat) zum Frittierfett.

## Patentansprüche

1. Wasser-in-ÖI-Emulsion als Zusatzmittel für Brat-, Siede- und Frittierfette,
**dadurch gekennzeichnet, dass** die Wasser-in-Öl-Emulsion Antioxidantien in Kombination mit wasserlöslichen Carbonsäuren enthält.

2. Wasser-in-Öl-Emulsion nach Anspruch 1,
**dadurch gekennzeichnet, dass** die Carbonsäure metall-komplexierend ist.

3. Wasser-in-Öl-Emulsion nach Anspruch 1 oder 2,
**dadurch gekennzeichnet, dass** die Carbonsäure Zitronensäure ist.

4. Wasser-in-ÖI-Emulsion nach einem der Ansprüche 1 bis 3,
**dadurch gekennzeichnet, dass** die Carbonsäure als 5 bis 10%ige wässrige Lösung Bestandteil der Wasserphase der Wasser-in-Öl-Emulsion ist.

5. Wasser-in-ÖI-Emulsion nach einem der Ansprüche 1 bis 4,
**dadurch gekennzeichnet, dass** ein Öl-Anteil an der Wasser-in-ÖI-Emulsion natives oder ein nicht raffiniertes Speiseöl ist.

6. Wasser-in-ÖI-Emulsion nach einem der Ansprüche 1 bis 5,
**dadurch gekennzeichnet, dass** die Antioxidantien Tocopherole und/oder Ascorbylpalmitat umfassen.

7. Wasser-in-ÖI-Emulsion nach einem der Ansprüche 1 bis 6,
**dadurch gekennzeichnet, dass** die Wasser-in-ÖI-Emulsion einen Emulgator enthält.

8. Wasser-in-Öl-Emulsion nach Anspruch 7,
**dadurch gekennzeichnet, dass** der Emulgator ein Ester von Mono- und Diglyceriden mit Fettsäuren oder organischen Säuren ist.

9. Wasser-in-Öl-Emulsion nach Anspruch 7,
**dadurch gekennzeichnet, dass** der Emulgator ein polykondensierter Glycerinester mit polykondensierten Fettsäuren ist.

10. Wasser-in-Öl-Emulsion nach Anspruch 7,
**dadurch gekennzeichnet, dass** der Emulgator ein polykondensierter Glycerinester mit Ricinolsäure oder polykondensierten Ricinolsäure ist.

11. Wasser-in-Öl-Emulsion nach einem der Ansprüche 1 bis 10,
**dadurch gekennzeichnet, dass** der Wassergehalt der Wasser-in-ÖI-Emulsion 1 bis 30 Gew.-% beträgt.

12. Wasser-in-ÖI-Emulsion nach einem der Ansprüche 1 bis 10,
**dadurch gekennzeichnet, dass** die Wasser-in-ÖI-Emulsion
- Öle (Fette) in einer Menge von 70-90 Gew.-%,
- Wasser in einer Menge von 12-20 Gew.-%,
- eine oder mehrere wasserlösliche Carbonsäuren in einer Menge von 0,5-4 Gew.-%,
- ein oder mehrere Antioxidantien in einer Menge von 0,1-1 Gew.-%;
- gegebenenfalls einen oder mehrere Emulgatoren sowie
- gegebenenfalls weitere übliche Zusatzstoffe
umfasst, wobei die Summe der eingesetzten Bestandteile 100 Gew.-% beträgt.

13. Verwendung einer Wasser-in-ÖI-Emulsion nach einem der Ansprüche 1 bis 12 als Zusatzmittel für zu erhitzende Brat-, Siede- und Frittierfett.

14. Verwendung einer Wasser-in-ÖI-Emulsion nach einem der Ansprüche 1 bis 12 als Zusatzmittel für ein zu erhitzendes Brat-, Siede- oder Frittierfett, wobei der Anteil der Wasser-in-ÖI-Emulsion im Brat-, Siede- oder Frittierfett 0,5 bis 10 Gew.-% beträgt.

15. Verfahren zur Stabilisierung eines Frittiermediums,
**dadurch gekennzeichnet, dass** dem Frittiermedium eine Wasser-in-ÖI-Emulsion nach einem der Ansprüche 1-12 zugesetzt wird.
